# EUROPÄISCHE PATENTSCHRIFT

(11) **EP 0 714 729 B1**
(45) Veröffentlichungstag und Bekanntmachung des Hinweises auf die Patenterteilung: **10.06.1998**
(21) Anmeldenummer: 95111470.1
(22) Anmeldetag: 21.07.1995
(51) Int. Cl.: B23Q 1/70

(54) **Spindelkasten für Drehmaschinen**
Headstock for lathe
Poupée pour tour

(30) Priorität: 01.12.1994 DE 9419220 U
(43) Veröffentlichungstag der Anmeldung: 05.06.1996
(73) Patentinhaber: Alfred H. Schütte GmbH & Co. KG., 51105 Köln (DE)
(72) Erfinder: Langer, Detlef, Dr., D-51503 Rösrath (DE); Neumann, Michael, D-47665 Sonsbeck (DE)
(74) Vertreter: Hennicke, Albrecht, Dipl.-Ing.

(56) Entgegenhaltungen:
- EP-A- 0 405 158
- EP-A- 0 417 530
- EP-A- 0 588 090
- GB-A- 2 139 141
- US-A- 3 800 636
- US-A- 4 622 194
- PATENT ABSTRACTS OF JAPAN vol. 7 no. 203 (M-241) ,8.September 1983 & JP-A-58 102638 (OKUMA TEKKOSHO KK) 18.Juni 1983,
- PATENT ABSTRACTS OF JAPAN vol. 10 no. 326 (M-532) [2382] ,6.November 1986 & JP-A-61 131840 (KYOCERA CORP) 19.Juni 1986,

## Beschreibung

Die Erfindung betrifft einen Spindelkasten für Drehmaschinen, insbesondere für Mehspindeldrehautomaten, mit einer Vorderwand und einer Rückwand, in denen die Werkstückspindel oder die Werkstückspindeltrominel drehbar gelagert wird und wobei an der Vorderwand Schlittenkonsolen und Tragelemente angeordnet sind.

Es ist ein Mehrspindeldrehautomat gemäß dem Oberbegriff des unabhängigen Anspruchs 1 bekannt (EP 0 417 530 A1), dessen Spindelkasten, Wie bei Drehmaschinen üblich, aus Stahlblech zusammengeschweißt oder aus Metall gegossen ist. Aus fertigungstechnischen Gründen können Spindelkästen aus Metall nur mit verhältnismäßig dünnen Wänden hergestellt werden. Sie sind deshalb schwingungsempfindlich und erlangen nur durch viele Verstrebungen im Inneren eine ausreichende Steifigkeit. Da sie aus Metall bestehen, nehmen sie leicht Wärme auf, die bei der Bearbeitung der Werkstücke entsteht und zu unerwünschten Verformungen führen kann. Bei Mehrspindeldrehautomaten müssen die Schlittenführungen für die Querschlitten an der Vorderwand des Spindelkastens angeschraubt werden, wobei Fugen zwischen Spindelkasten und Schlittenführung vorhanden sind, welche die Schwingungsneigung erhöhen.

Es ist auch bereits bekannt, das Maschinenbett und den Maschinenrahmen oder Teile des Spindelkastens aus vorgespanntem Beton herzustellen (US-A-3 800 636). Hierbei soll die mit Spanngliedern oder Spannstäben erzeugte Vorspannung Zugspannungen im Beton überdrücken, die bei der Bearbeitung der Werkstücke im Maschinenrahmen und ggf. im Spindelstock und Reitstock auftreten. Die Anordnung und Verteilung der Spannglieder im Beton zwingt jedoch zu einer einfachen und kompakten Konstruktion des Maschinenrahmens, die eine feingliedrige, komplexe Ausgestaltung der Vorderwand des Spindelkastens nicht zuläßt.

Es ist auch bereits bekannt, einzelne Maschinenteile, wie Lagerrohre für Wellen od.dgl. in Polymerbeton einzubetten, um bei einem Bearbeitungsprozeß entstehende Schwingungen zu dämpfen (JP-58 102 638 - Patent abstracts of Japan - ). Zur Vermeidung von Schwingungen und Betriebsgeräuschen ist es auch bei Bandsägemaschinen bekannt, das Sägehaupt aus Polymerbeton herzustellen (GB-A-2 139 141) oder das Maschinenbett, den Ständer und eine Führungswand für den beweglichen Spindelkasten einer Werkzeugmaschine aus Polymerbeton zu gießen (EP-A3-0 588 090).

Aufgabe der Erfindung ist es, einen Spindelkasten für Drehmaschinen zu schaffen, der nicht nur beim Bearbeitungsprozeß entstehende Schwingungen dämpft, sondern auch eine sehr genaue Zuordnung aller für die Arbeitsgenauigkeit der Drehmaschine wichtige Bauelemente gestattet und die Zahl von Fugen zwischen Spindelkasten und Anbauteilen auf ein Minimum reduziert.

Diese Aufgabe wird mit der Erfindung dadurch gelöst, daß mindestens die dem Arbeitsraum der Maschine zugewandte Vorderwand des Spindelkastens und die an ihr angeordneten Schlittenkonsolen und Tragelemente aus Polymerbeton bestehen und aus einem Stück geformt sind.

Diese Ausgestaltung hat den Vorteil, daß der Spindelkasten mit dicken Wänden und Versteifungsstreben von großem Querschnitt gefertigt werden kann, so daß sich ein sehr steifer Kasten ergibt, der gegen Schwingungen sehr unempfindlich ist. Da der Spindelkasten mit den Schlittenkonsolen aus einem Stück besteht, schließt sich der von den Querschlittenwerkzeugen erzeugte Kraftfluß, ohne Konstruktionsfugen zu durchlaufen.

Der Polymerbeton, beispielsweise eine epoxydharzgebundene Mineralstoffmasse, die Quarze, Basalt oder andere gebrochene oder rollige Mineralien enthalten kann, vermag relativ viel Wärme zu speichern, leitet diese aber schlecht weiter. Die thermischen Verformungen gehen nur langsam vor sich.

Besonders zweckmäßig ist es , den gesamten Spindelkasten mit allen an ihm angeordneten Konsolen und Tragelementen in einem Stück aus Polymerbeton zu gießen und als Mineralgußteil herzustellen.

Um größte Genauigkeiten zu erreichen und alle weiteren Bauteile aus Metall im Spindelkasten wie üblich lagern zu können, sind die Stützflächen für die Drehlager von Wellen, der Spindel oder der Spindeltrommel und/oder die Lagerflächen für die Schlittenführungen an den Schlittenkonsolen mit eingegossenen Metallteilen gepanzert. An diesen Metallteilen können die Schlittenführungen angeschraubt oder Lager- oder Steuerelemente für bewegte Bauteile befestigt werden. Hierbei ist es besonders zweckmäßig, wenn in die Vorderwand ein Basisring aus Metall eingegossen ist, der die Lageröffnung für die Spindel oder die Spindeltrommel umgibt und auf dem ein Lagerring für die Spindel oder der Verriegelungszylinder für die Spindeltrommel zentriert werden kann, der dann in die Vorderwand, z.B. mit einem Epoxydharz, eingeklebt wird. Diese Ausgestaltung gestattet es, etwaige Ungenauigkeiten beim Gießen des Spindelkastens auszugleichen und den Lagerring für die Spindel oder die Spindeltrommel sehr genau zu zentrieren, so daß sich eine genaue Zuordnung zu den Werkzeugen ergibt.

Die Herstellung des Spindelkastens in Polymerbeton mit dicken Wänden gestattet es, mindestens einige, jedoch vorzugsweise alle für den Betrieb der Spindel, der Spindeltrommel und der Werkzeuge erforderlichen Leitungen im Polymerbeton des Spindelkastens einzubetten. Diese Leitungen können Hydraulik, Druckluft-, Schmierstoff- oder Elektroleitungen sein, je nach Art der verwendeten Antriebe für die Spindeltrommel und die Werkzeugschlitten.

Die im Polymerbeton eingebetteten Leitungen können in Metallplatten münden, die an einer Oberfläche der Vorderwand oder Rückwand oder einer Schlittenkonsole in den Wänden des Spindelkastens eingebettet sind. Hierbei können die Metallplatten Unterplatten sein, auf denen die Steuer- und Regelorgane für Betriebsmittel oder Schmiermittel befestigbar sind. Die Metallplatten können aber auch Auflageplatten für die Schlittenführungen der Werkzeugschlitten sein, an denen die Schlittenführungen angeschraubt werden.

Zwischen Vorderwand und Rückwand kann ein mit dem Spindelkasten einstückiges Tragelement für eine Hubvorrichtung zum Anheben der Spindeltrommel beim Weiterschalten in eine andere Werkstücklage angeordnet sein, in der auch ein Hydraulikzylinder eingebettet werden kann, wenn die Gewichtsentlastung der Spindeltrommel beim Weiterschalten hydraulisch bewirkt werden soll.

Eine besonders einfache Lagerung der Stangenanschlagwellen im Spindelkasten ergibt sich, wenn in die Vorderwand und in die Rückwand des Spindelkastens Metallhülsen im Polymerbeton eingebettet sind, durch die die Stangenanschlagwellen hindurchgeführt werden.

Um den Wärmeübergang vom Arbeitsraum auf den Spindelkasten auf ein Minimum zu reduzieren, ist es vorteilhaft, mindestens auf der dem Arbeitsraum der Maschine zugewandten Vorderseite der Vorderwand vorspringende Leisten, Absätze od.dgl. anzuformen, auf denen eine Abdeckung, z.B. ein Abdeckblech od.dgl., befestigbar ist, die zusammen mit der Vorderwand einen hohlen Kühlmantel bildet. Dieser Kühlmantel kann auch noch an einem Kühlmittelkreislauf angeschlossen werden, so daß vom Arbeitsraum auf den Spindelkasten übergeleitete Wärme sofort abgeführt wird und die Temperatur des Spindelkastens konstantgehalten werden kann.

Weitere Merkmale und Vorteile der Erfindung ergeben sich aus der nachfolgenden Beschreibung und den Zeichnungen, in denen eine bevorzugte Ausführungsform der Erfindung an einem Beispiel näher erläutert wird. Es zeigt:
- Fig. 1: einen Spindelkasten für einen Mehrspindeldrehautomaten nach der Erfindung in einer Vorderansicht,
- Fig. 2: den Spindelkasten nach Fig. 1 in einem Vertikalschnitt nach Linie II-II,
- Fig. 3: den Gegenstand der Fig. 2 in einem senkrechten Schnitt nach Linie III-III und
- Fig. 4: eine Einzelheit IV der Fig. 2 in einer perspektivischen Teildarstellung.

In den Zeichnungen ist mit 10 ein Spindelkasten für einen Mehrspindeldrehautomaten bezeichnet, der aus einer Vorderwand 11 und einer Rückwand 12 besteht, die durch Zwischenwände 13 und 14 und Fußplatten 15 und 16 miteinander verbunden und ausgesteift sind. Die Vorderwand 11 und die Rückwand 12 des Spindelkastens 10 haben miteinander fluchtende, kreisrunde Öffnungen 17 und 18, in denen die nicht näher dargestellte Spindeltrommel gelagert wird, die im Bereich zwischen der Vorderwand 11 und der Rückwand 12 von den Zwischenwänden 13 und 14 teilweise umgeben wird.

An der dem Arbeitsraum der Maschine zugewandten Oberfläche 19 der Vorderwand 11 sind mehrere Schlittenkonsolen 20 angeordnet, die über die Oberfläche 19 vorspringen und mit der Vorderwand 11 des Spindelkastens 10 aus einem Stück bestehen.

Im unteren Teil des Spindelkastens 10 ist zwischen der Vorderwand 11 und der Rückwand 12 ein Tragelement 21 angeordnet, das mit dem Spindelkasten 10 aus einem Stück besteht und eine Ausnehmung 22 aufweist, in der eine metallische Büchse 23 zur Aufnahme des nicht-dargestellten Hydraulikzylinders einer Hubvorrichtung angeordnet ist, die die Spindeltrommel beim Weiterschalten in eine andere Werkstücklage anhebt.

Neben den Spitzen 20a der seitlich neben der Öffnung 17 angeordneten Schlittenkonsolen 20 befinden sich in der Vorderwand 11 und der Rückwand 12 miteinander fluchtende Bohrungen 24 für die Durchführung der Stangenanschlagwellen.

Der gesamte Spindelkasten 10 mit den an seiner Vorderwand 11 angeformten Schlittenkonsolen 20 wird in einem Stück aus einem Polymerbeton geeigneter Zusammensetzung gegossen. Hierbei besteht der Polymerbeton im wesentlichen aus einem Reaktionsharz, wie Polyester oder Epoxydharz als Bindemittel und in ihrer Körnung abgestuften, mineralischen Zuschlagstoffen, wie Quarzen, Basalten, Granit od.dgl., die aus natürlichen Vorkommen gewonnen oder gebrochen werden.

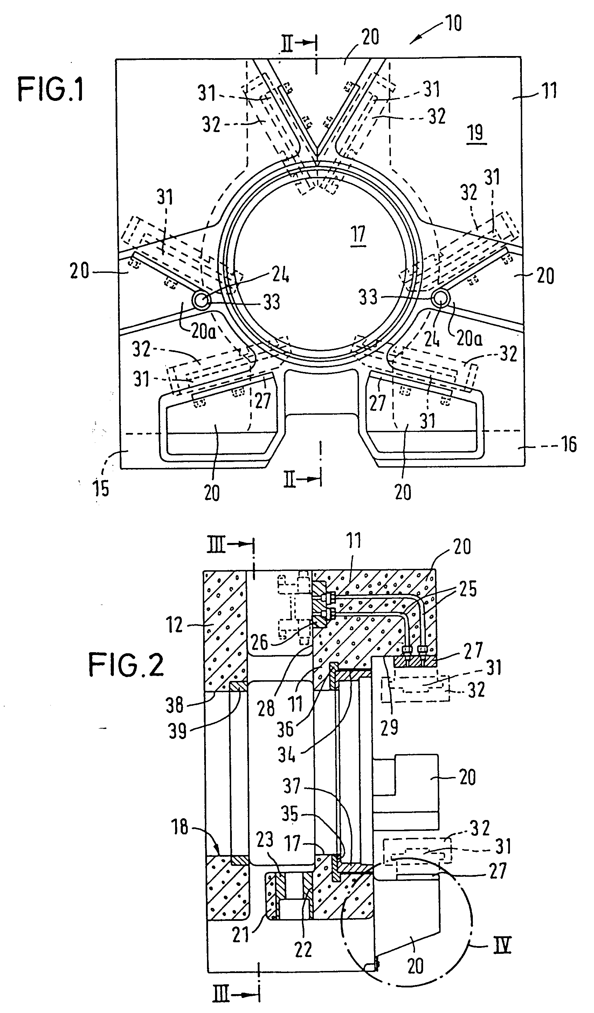

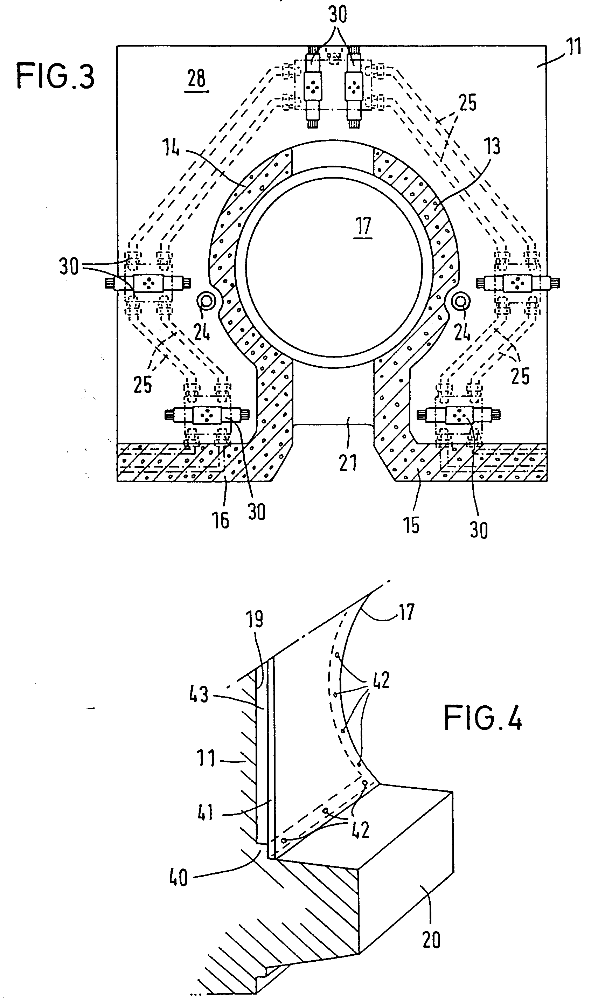

Man erkennt aus den Fig. 2 und 3 der Zeichnung, daß im Polymerbeton der Vorderwand 11 und der Schlittenkonsolen 20 Leitungen 25 eingegossen sind, die in Metallplatten 26 und 27 münden, die an einer Oberfläche 28 der Vorderwand 11 oder in einer Oberfläche 29 einer Schlittenkonsole 20 im Polymerbeton des Spindelkastens 10 eingebettet sind. Hierbei sind die Metallplatten 26 Unterplatten, die sich auf der Rückseite der Vorderwand 11 befinden und die Steuer- und Regelorgane 30, beispielsweise die Ventile für das hydraulische Betriebsmittel tragen, die unmittelbar auf diesen Unterplatten befestigt werden können.

Die Metallplatten 27 sind Auflageplatten für die strichiert angedeuteten Schlittenführungen 31 der in Fig. 1 strichpunktiert angedeuteten Werkzeugschlitten 32. An diesen Auflageplatten 27 werden die Schlittenführungen 31 unmittelbar angeschraubt, wobei ihre Ein- und Ausgänge für das Betriebsmittel, beispielsweise der Hydraulikflüssigkeit unmittelbar an die in den Auflageplatten mündenden Hydraulikleitungen 25 angeschlossen werden.

Man erkennt in Fig. 1, daß die Bohrungen 24 für die Stangenanschlagwellen mit Metallbüchsen 33 ausgekleidet sind, die ebenso wie die Metallplatten 26 und 27 zweckmäßig in den Polymerbeton mit eingegossen werden. Man erkennt ferner aus Fig. 2, daß die kreisrunde Öffnung 17 in der Vorderwand einen abgestuften Absatz 34 aufweist, der eine Schulter 35 bildet. Auf dieser Schulter 35 liegt ein Basisring 36 aus Metall, vorzugsweise aus Stahl, der beim Gießen des Spindelkastens 10 in den Polymerbeton der Vorderwand mit eingebettet wurde. Dieser metallische Basisring 36 umgibt die Lageröffnung 17 und dient als Auflager für einen Lagerring oder für den Verriegelungszylinder 37 der Spindeltrommel. Der Verriegelungszylinder 37 kann auf dem Basisring 36 genau zentriert und in der zentrierten Stellung mit Epoxydharz in den abgestuften Absatz 34 der Lageröffnung 17 eingeklebt werden. Der Lagerring oder der Verriegelungszylinder 37 besteht in der Regel ebenfalls aus Metall.

Man erkennt aus Fig. 2, daß auch die innere Umfangsfläche der Öffnung 18 in der Rückwand 12, welche eine Stützfläche 38 für das nicht näher dargestellte hintere Drehlager der Spindeltrommel bildet, mit einem eingegossenen Metallring 39 gepanzert ist.

In Fig. 4 erkennt man, daß auf der dem Arbeitsraum der Maschine zugewandten vorderen Oberfläche 19 der Vorderwand 11 vorspringende Leisten oder Absätze 40 angeformt sind, auf denen eine Abdeckung 41, beispielsweise ein Abdeckblech mit Schrauben 42 befestigt werden kann. Diese Abdeckung befindet sich hierdurch in einem gewissen Abstand von der vorderen Oberfläche 19 der Vorderwand 11 und bildet zusammen mit dieser einen Kühlmantel 43, der an den Rändern geschlossen sein kann und an einen nicht näher dargestellten Kühlmittelkreislauf anschließbar ist.

Die Erfindung ist nicht auf das dargestellte und beschriebene Ausführungsbeispiel beschränkt, sondern es sind mehrere Änderungen und Ergänzungen möglich, ohne den Rahmen der Erfindung zu verlassen. Beispielsweise kann es genügen, nur die Vorderwand des Spindelkastens und die an ihr angeordneten Schlittenkonsden und Tragelemente aus Polymerbeton herzustellen und diese mit einem Teil aus Grauguß zu verbinden, das die Rückwand und die die Spindeltrommel umgebenden Umfangswände bildet. Ferner ist es möglich, nicht nur Hydraulikleitungen für den Betrieb der Werkzeuge, sondern auch Schmiermittelleitungen, Elektroleitungen und Teile des Verriegelungsmechanismus für die Spindeltrommel in den Polymerbeton des Spindelkastens mit einzugießen. Ferner können natürlich auch noch andere Halterungen, Wellendurchführungen od.dgl. mit dem Spindelkasten aus einem Stück gegossen werden. Es ist auch möglich, den ganzen Spindelkasten 10 mit einem Kühlmantel der weiter oben näher beschriebenen Art zu umgeben.

## Patentansprüche

1. Spindelkasten (10) für Drehmaschinen, insbesondere für Mehrspindeldrehautomaten, mit einer Vorderwand (11) und einer Rückwand (12), in denen die Werkstückspindel oder die Werkstückspindeltrommel drehbar gelagert wird, und wobei an der Vorderwand (11) Schlittenkonsolen (20) und Tragelemente (21) angeordnet sind, **dadurch gekennzeichnet, daß** mindestens die dem Arbeitsraum der Maschine zugewandte Vorderwand (11) des Spindelkastens (10) und die an ihr angeordneten Schlittenkonsolen (20) und Tragelemente (21) aus Polymerbeton bestehen und aus einem Stück geformt sind.

2. Spindelkasten nach Anspruch 1, **dadurch gekennzeichnet, daß** der gesamte Kasten (10) mit allen an ihm angeordneten Konsolen (20) und Tragelementen (21) in einem Stück aus Polymerbeton gegossen ist.

3. Spindelkasten nach Anspruch 1 oder 2, **dadurch gekennzeichnet, daß** die Stützflächen (34, 35, 38) für die Drehlager von Wellen der Spindel oder der Spindeltrommel und/oder die Lagerflächen (29) für die Schlittenführungen (31) an den Schlittenkonsolen (20) mit eingegossenen Metallteilen (27, 33, 39) gepanzert sind.

4. Spindelkasten nach einem der Ansprüche 1 bis 3, **dadurch gekennzeichnet, daß** in die Vorderwand (11) ein Basisring (36) aus Metall eingegossen ist, der die Lageröffnung (17) für die Spindel oder die Spindeltrommel umgibt und auf dem ein Lagerring für die Spindel oder ein Verriegelungszylinder (37) für die Spindeltrommel zentriert und in die Vorderwand (11) eingeklebt wird.

5. Spindelkasten nach einem der Ansprüche 1 bis 4, **dadurch gekennzeichnet, daß** mindestens einige der für den Betrieb der Spindel, der Spindeltrommel und der Werkzeuge erforderlichen Leitungen (25) im Polymerbeton des Spindelkastens (10) eingebettet sind.

6. Spindelkasten nach einem der Ansprüche 1 bis 5, **dadurch gekennzeichnet, daß** die Leitungen (25) in Metallplatten (26, 27) münden, die an einer Oberfläche (28, 29) der Vorderwand (11) oder Rückwand (12) oder einer Schlittenkonsole (20) im Polymerbeton des Spindelkastens (10) eingebettet sind.

7. Spindelkasten nach einem der Ansprüche 1 bis 6, **dadurch gekennzeichnet, daß** die Metallplatten Unterplatten (26) sind, auf denen die Steuer- und Regelorgane (30) für Betriebsmittel oder Schmiermittel befestigbar sind.

8. Spindelkasten nach einem der Ansprüche 1 bis 6, **dadurch gekennzeichnet, daß** die Metallplatten Auflageplatten (27) für die Schlittenführungen (31) der Werkzeugschlitten (32) sind.

9. Spindelkasten nach einem der Ansprüche 1 bis 8**, gekennzeichnet durch** ein zwischen Vorderwand (11) und Rückwand (12) angeordnetes, mit dem Spindelkasten (10) einstückiges Tragelement (21) für eine Hubvorrichtung zum Anheben der Spindeltrommel beim Weiterschalten in eine andere Werkstücklage.

10. Spindelkasten nach einem der Ansprüche 1 bis 9, **dadurch gekennzeichnet, daß** in die Vorderwand (11) und in die Rückwand (12) Metallhülsen (33) für die Durchführung der Stangenanschlagwellen im Polymerbeton eingebettet sind.

11. Spindelkasten nach einem der Ansprüche 1 bis 10, **dadurch gekennzeichnet, daß** in das Tragelement (21) für die Hubvorrichtung eine Büchse (23) für einen Hydraulikzylinder eingebettet ist.

12. Spindelkasten nach einem der Ansprüche 1 bis 11, **dadurch gekennzeichnet, daß** mindestens auf der dem Arbeitsraum der Maschine zugewandten vorderen Oberfläche (19) der Vorderwand (11) vorspringende Leisten (40), Absätze od.dgl. angeformt sind, auf denen eine Abdeckung (41) befestigbar ist, die zusammen mit der Vorderwand (11) einen hohlen Kühlmantel (43) bildet.

13. Spindelkasten nach einem der Ansprüche 1 bis 12, **dadurch gekennzeichnet, daß** der Kühlmantel (43) an einen Kühlmittelkreislauf anschließbar ist.

## Claims

1. Spindle box (10) for lathe, in particular for multi-spindle automatic lathe, comprising a front wall (11) and a rear wall (12) in which the workpiece spindle or the workpiece spindle drum are rotatingly mounted, and at the front wall (11) are arranged carriage consoles (20) an support elements (21), **characterised in that** at least the front wall (11) of the spindle box (10) facing towards the work area of the machine and thereon arranged carriage consoles (20) and support elements (21) are made of polymer concrete and are formed of one piece.

2. Spindle box according to Claim 1, **characterised in that** the entire box (10) with all thereto fitted consoles (20) and support elements (21) is cast in one piece of polymer concrete.

3. Spindle box according to Claim 1 or 2, **characterised in that** the support surfaces (34, 35, 38) for the rotary mounts of shafts of the spindle or the spindle drum and/or the mounting surfaces (29) for the carriage guides (31) on the carriage consoles (20) are reinforced with cast-in metal parts (27,33, 39).

4. Spindle box according to one of Claims 1 to 3, **characterised in that** into the front wall (11) is cast a base ring (36) of metal which encases the mounting aperture (17) for the spindle or the spindle drum and on which one mounting ring for the spindle or a locking cylinder (37) for the spindle drum is centred and glued into the front wall (11).

5. Spindle box according to one of Claims 1 to 4, **characterised in that** at least some of the pipes/wires (25) required for operating the spindle, the spindle drum and the tools are embedded in the polymer concrete of the spindle box (10).

6. Spindle box according to one of Claims 1 to 5, **characterised in that** the pipes/wires (25) merge into metal plates (26, 27) which are embedded on a surface (28, 29) of the front wall (11) or rear wall (12) or a carriage console (20) in the polymer concrete of the spindle box (10).

7. Spindle box according to one of Claims 1 to 6, **characterised in that** the metal plates are bottom plates (26) onto which the control and regulating elements (30) for operating means or lubricants can be mounted.

8. Spindle box according to one of Claims 1 to 6, **characterised in that** the metal plates are supporting plates (27) for the carriage guides (31) of the tool carriages (32).

9. Spindle box according to one of Claims 1 to 8, **characterised by** a support element (21), integrated with the spindle box (10) and arranged between front wall (11) and rear wall (12), for a lifting device for lifting the spindle drum when advancing to a different workpiece position.

10. Spindle box according to one of Claims 1 to 9, **characterised in that** into the front wall (11) and the rear wall (12) are embedded in polymer concrete metal sleeves (33) to pass through rod stop shafts.

11. Spindle box according to one of Claims 1 to 10, **characterised in that** into the support element (21) for the lifting device is embedded a bush (23) for a hydraulic cylinder.

12. Spindle box according to one of Claims 1 to 11, **characterised in that** at least onto the front surface (19) of the front wall (11) facing towards the work area of the machine are formed protruding edges (40), steps or the like on which a cover (41) can be mounted which together with the front wall (11) forms a hollow cooler casing.

13. Spindle box according to one of Claims 1 to 12, **characterised in that** the cooler casing (43) is connectable to a refrigerant circuit.

## Revendications

1. Poupée fixe (10) pour tours, en particulier pour tours automatiques multibroches, comportant une paroi avant (11) et une paroi arrière (12) dans lesquelles la broche porte-pièce ou le tambour de broche porte-pièce est monté tournant, et des consoles de chariot (20) ainsi que des éléments de support (21) étant disposés sur la paroi avant (11), caractérisée en ce qu'au moins la paroi avant (11) de la poupée fixe (10), tournée vers l'espace de travail de la machine, et les consoles de chariot (20) et éléments de support (21), placés sur celle-ci, sont en béton polymère et formés d'une seule pièce.

2. Poupée fixe selon la revendication 1, caractérisée en ce que l'ensemble de la poupée fixe (10), avec toutes les consoles (20) et éléments de support (21), placés sur celle-ci, sont coulés d'un seul tenant en béton polymère.

3. Poupée fixe selon la revendication 1 ou 2, caractérisée en ce que les surfaces d'appui (34, 35, 38) pour les paliers de roulement des arbres de la broche ou du tambour de broche et/ou les surfaces de palier (29) pour les guides de chariot (31) sur les consoles de chariot (20), sont blindées avec des parties métalliques (27, 33, 39) coulées à l'intérieur.

4. Poupée fixe selon l'une des revendications 1 à 3, caractérisée en ce que dans la paroi avant (11) est coulé un anneau de base (36) en métal, qui entoure l'ouverture de palier (17) pour la broche ou le' tambour de broche et sur lequel est centré un anneau de palier pour la broche ou un cylindre de verrouillage (37) pour le tambour de broche et qui est collé dans la paroi avant (11).

5. Poupée fixe selon l'une des revendications 1 à 4, caractérisée en ce qu'au moins certaines des conduites (25) nécessaires au fonctionnement de la broche, du tambour de broche et des outils, sont noyées dans le béton polymère de la poupée fixe (10).

6. Poupée fixe selon l'une des revendications 1 à 5, caractérisée en ce que les conduites (25) débouchent dans des plaques métalliques (26, 27), qui sont noyées dans le béton polymère de la poupée fixe (10), sur une surface (28, 29) de la paroi avant (11) ou de la paroi arrière (12) ou d'une console de chariot (20).

7. Poupée fixe selon l'une des revendications 1 à 6, caractérisée en ce que les plaques métalliques sont des sous-plaques (26), sur lesquelles peuvent être fixées les organes de commande et de régulation (30) pour des fluides de service ou des lubrifiants.

8. Poupée fixe selon l'une des revendications 1 à 6, caractérisée en ce que les plaques métalliques sont des plaques de support (27) pour les guides de chariot (31) des chariots porte-outil (32).

9. Poupée fixe selon l'une des revendications 1 à 8, caractérisée par un élément de support (21) d'une seule pièce avec la poupée fixe (10), placé entre la paroi avant (11) et la paroi arrière (12), pour un dispositif de levage, destiné à relever le tambour de broche lors de la commutation dans une autre position de pièce.

10. Poupée fixe selon l'une des revendications 1 à 9, caractérisée en ce que dans la paroi avant (11) et dans la paroi arrière (12), des manchons métalliques (33) sont noyés dans le béton polymère, pour le passage des arbres de butée des barres.

11. Poupée fixe selon l'une des revendications 1 à 10, caractérisée en ce que dans l'élément de support (21) pour le dispositif de levage, est noyée une douille (23) pour un vérin hydraulique.

12. Poupée fixe selon l'une des revendications 1 à 11, caractérisée en ce qu'au moins sur la surface avant (19) de la paroi avant (11), tournée vers l'espace de travail de la machine, sont formés des baguettes saillantes (40), des gradins ou similaires, sur lesquels peut être fixée un capot (41) qui forme une enveloppe de refroidissement (43) creuse, avec la paroi avant (11).

13. Poupée fixe selon l'une des revendications 1 à 12, caractérisée en ce que l'enveloppe de refroidissement (43) peut être raccordée à un circuit de réfrigérant.
